# EUROPEAN PATENT APPLICATION

(11) **EP 4 474 767 A1**
(43) Date of publication of application: **11.12.2024**
(21) Application number: 23178071.9
(22) Date of filing: 07.06.2023
(51) Int. Cl.: G01C 21/00, E01C 1/00, G05D 1/00

(54) **METHOD, SYSTEM AND COMPUTER PROGRAM FOR OBTAINING AN HD MAP FOR ROAD LANE DELIMITERS**

(71) Applicant: Desse-T-Iny, 1410 Waterloo (BE)
(72) Inventor: DESSEILLES, Thomas, 1410 WATERLOO (BE)
(74) Representative: Calysta NV

(57) **Abstract**

System for obtaining a high definition map of a lane delimiter (3) for highly automated driving, comprising: a localization tool (20) configured to be mounted on a road construction machine (10) for generating a lane delimiter (3) on a road (1), wherein the localization tool (20) is configured to record the location points of the localization tool (20) over time, while the road construction machine (10) performs lane delimiter work (3) in order to obtain the location points of the lane delimiter (3), and a processing means (30) for processing the recorded location points to obtain map data of the high definition map representing the lane delimiter (3) generated on the road (1).

## Description

### Technical Field

The present invention relates to a method, system and computer program for obtaining an HD map for road surface markings.

### Prior art

Cooperative Connected Automated Mobility (CCAM) is a new approach to mobility that leverages the latest advances in connected and automated vehicle technology to create a more efficient, safe, and sustainable transportation system. The CCAM ecosystem includes a range of actors, including vehicle manufacturers, technology providers, governments, and infrastructure operators, all of whom must work together to create and implement this new approach.

One of the main challenges in implementing CCAM is ensuring that all of the different systems and technologies involved work seamlessly together. This requires a high degree of coordination and collaboration between all of the actors in the ecosystem, as well as the development of new standards and protocols to ensure that information is transmitted and processed reliably and securely.

Another challenge is the need to build up the necessary physical and digital infrastructure (PDI) to support CCAM. This includes the development of high-definition maps (HD maps), which are critical for ensuring that automated vehicles can navigate safely and efficiently. HD maps provide detailed information about static elements, semi-static elements and dynamic data. Static elements might refer for example to lane geometry, lane lane markings and lane boundaries. Semi-static elements might refer to road works at a certain place at a certain time, but the evolution of the change is rather slow. Dynamic data might refer to traffic related information, traffic light phase status, on-street parking availability.

HD maps play a critical role in the implementation of CCAM. They provide detailed information that automated vehicles need to navigate safely and efficiently and are a key component of the physical digital infrastructure that is necessary to support this new approach to mobility. HD maps must be updated regularly to reflect changes in the physical environment, such as the construction of new roads, the addition of new traffic signs or even for temporary road works.

Two EU R&D projects are already working on this topic. The project PODIUM works on the physical and digital infrastructure (PDI) connectivity and cooperation enablers to build trust and sustainability for CCAM. AUGMENTED CCAM is working on a crowdsourcing approach. Both projects however have unsettled issues with the acquisition technology for HD maps to reach the required accuracy.

The SAE standard J3016 defines the different levels of driving automation from Level 0 to Level 5. Level 0 to 2 involve the active driving of the driver, while in level 3 to 5, the assistance of the driver is not necessary or only when some feature request the intervention of the driver.

State of the art navigation systems are based on standard definition (SD) maps with accuracy below 5 meters (m). For automated driving, higher accuracies are required. The accuracy of an HD map is considered better than 1m. Advanced Driver-Assistance Systems (ADAS) maps are maps with an accuracy between 1 m and 5m. HD maps for automated driving are often also called highly automated driving (HAD) maps.

The automated driving uses map data and an environmental model to automatically drive the vehicle. The map data comprises normally several map layers including often an SD map for map matching, an HD map for the lane model and an HD map for the localization of landmarks and obstacles.

The state of the art for obtaining HD maps of a road is the drive along the respective road a plurality of times (currently up to 15 times) with a car having mounted sensors like cameras, lasers, radars, GNSS receivers, etc. These can be specially developed cars or can be standard cars in a crowdsourcing approach. The SAE International paper "Unsettled Issues on HD Mapping Technology for Autonomous Driving and ADAS" (ISSN 2640-3536) analyzed that the existing technologies face several issues at creation and maintenance level of the HD maps. A first problem is the effort to acquire the HD maps at a sufficient quality requires to drive the road with special sensor cars many times which is time and resource consuming. However, the even bigger challenge lies in the maintenance of the HD maps so to keep the HD map up to date, e.g. when there are road works or when there was a road maintenance with for example new road lines. One problem with this is for example a first vehicle detecting such a deviation from the HD map which could lead to an accident. Even if the map data for the changed part of the road are quickly reacquired, it takes at the moment several months until these changes are integrated in the HD map. In the following, the problem will be explained with the example of road lanes.

Roads include road surface markings like lane delimiting lines. Road surface markings are renewed, based on the used marking technology, every 1 to 7 years. In addition, the road surface requires periodic renewal involving also new road surface markings. During such road works, there might be even provisional road surface markings, e.g. when the lanes are deviated during the work. The current technology is not able to keep track of all these continuously updated road surface markings. Aerial data capture has not proven the required quality of the HD maps. Similar problems appear with roads without road markings, e.g. when the upper layer of the road is redone and the road/lane delimiter, i.e. the lateral border of the upper layer, changes.

There is therefore a need for an improved method and system for obtaining and maintaining HD maps of road surface marking.

In the field of road surface markings, there is a movement of automatizing the drawing of the road surface marking based on predefined location maps of the planned road surface marking and the automated drawing of the road surface markings based on the predefined location maps and the current position of the road surface marking like in US6299934B1. However, practical realizations of this fail due to missing HD maps of the roads. Also, EP2805229 suggests to use the GPS coordinates of old surface markings to draw the new surface markings on the same spot.

In the field of navigation system using SD maps, US10754348 suggests to use codes drawn in the road lines to capture the position of the code in the SD map, when the current position of the vehicle by the GNSS receiver is lost, e.g. in a tunnel. Thus, the position of the code indicates the position of in the direction of the road axis, but not a position delimiting the lane. The position of the code is directly measured with a GNSS receiver, when drawn on the road.

### Brief summary of the invention

It is the object of the invention to provide an improved method for obtaining HD maps for road lane delimiters.

According to the invention, this object is solved by the method, system and program according to the independent claims.

The object is further solved by a method for obtaining a high definition map of lane delimiters for highly automated driving: providing a localization tool on a road construction machine, wherein the road construction machine is configured for generating a lane delimiter of the road, wherein the localization tool is configured to determine location points of the localization tool over time; recording, in the localization tool, the location points along the itinerary of the localization tool during the generation of the lane delimiter on the road by the road construction machine; and processing, in a processing means, the recorded location points to obtain map data of the high definition map representing the generated lane delimiter generated on the road.

The object is further solved by a system for obtaining a high definition map of lane delimiters for highly automated driving: a localization tool configured to be mounted on a road construction machine for generating a lane delimiter on a road, wherein the localization tool is configured to record the location points of the localization tool over time, while the road construction machine generates the lane delimiter in order to obtain the location points of the lane delimiter; a processing means for processing the recorded location points to obtain map data of the high definition map representing the lane delimiter generated on the road.

The object is further solved by a computer program for obtaining a high definition map of lane delimiters for highly automated driving, wherein the computer program comprises a first computer program and a second computer program, wherein the first computer program comprises instructions to, when executed on a localization tool mounted on a road construction machine for generating a lane delimiter, recording the location points along an itinerary of the localization tool during the generation of the lane delimiter on the road by the road construction machine, and to sending the location data based on the location points to the second computer program, wherein the second computer program comprises instructions to, when executed on a processing means, receiving the location data and to processing the received location data to obtain map data of the high definition map representing the lane delimiter of the road.

By providing a localization tool on the road construction machine responsible for generating the lane delimiter on the road, and by recording the location points of the itinerary of the localization tool during the road work, the position of the lane delimiter can be acquired with a very high accuracy and without any delay. By processing these recorded location points into an HD map, very accurate HD maps for road surface marking can be obtained without any delay to reality. Since the lane delimiters like road surface marking and/or pavement must be regularly renewed, the HD map for lane delimiters can quickly be acquired without much extra work. In addition, the HD map will always stay up to date. For example, road surface marking must be renewed every 2 to 7 years, and pavements are also renewed periodically. The corresponding lane delimiters, like the lane lines or the road surface (pavement) lane boundaries can be automatically acquired with each work on the roads. Since no extra data acquisition vehicles are needed to obtain the road surface marking data, time, resources and pollution is reduced.

The dependant claims refer to further advantageous embodiments.

In one embodiment, the road construction machine is configured for generating road surface marking as the lane delimiter.

In one embodiment, the road construction machine comprises a marking unit for generating the road surface marking on the road, wherein the localization tool is mounted on the marking unit so that the localization tool performs the same itinerary as the marking unit. Preferably, the marking unit comprises a spray nozzle for spraying road surface marking on the road.

In one embodiment, the localization tool is communicatively connected to the road construction machine to receive marking information indicating, if the marking unit is currently generating road surface marking on the road or not, wherein the localization tool records the itinerary based on the marking information.

In one embodiment, when the marking unit is currently generating road surface marking, the localization tool records the itinerary of the localization tool related to the generated road surface marking, wherein, when the marking unit is currently not generating road surface marking, the localization tool does not record the itinerary or records the itinerary labeled as not relating to road surface marking.

In one embodiment, the road surface marking relates to lane delimiting lines of the road.

In one embodiment, the lane delimiter is a lateral border of the pavement, wherein the road construction machine is a road paving machine, wherein the localization tool (20) is placed such on the road paving machine that the itinerary of the localization tool (20) represents the itinerary of the lateral border of the road pavement.

In one embodiment, the map data comprise the location data of the lateral boundaries of at least one lane of the road.

In one embodiment, the localization tool comprises a GNSS receiver for determining the location points via the GNSS receiver.

In one embodiment, the location points are determined by applying a GNSS correction using RTK data and/or carrier phase tracking data received from a base station.

In one embodiment, the method comprising further the step of : mounting the base station in the vicinity of the road construction machine before the recording of the location points during the generation of the lane delimiter in a recording area; and demounting the base station in the vicinity of the road construction machine after the recording of the location points during the generation of the lane delimiters has been finished in the recording area.

In one embodiment, the localization tool comprises further relative position sensors for sensing a relative positional change, wherein the location points over time recorded are further improved by relative position data of the localization tool recorded during the generation of the lane delimiter on the road.

In one embodiment, the relative position sensor comprises an inertial measurement unit.

In one embodiment, the relative position sensor comprises an odometry sensor.

In one embodiment, the method comprising the step of providing the map data to a vehicle to support the vehicle for highly automated driving, preferably via a server.

In one embodiment, the method comprises the steps of: sending location data from the localization tool to a server, wherein the location data are based on the location points recorded by the localization tool along the itinerary of the localization tool during the generation of the lane delimiter on the road; processing the location data to obtain the map data on the server, wherein the processing of the location data to obtain the map data corresponds to at least a part of the processing of the location points to obtain the map data.

In one embodiment, the system comprises further the road construction machine with the localization tool mounted on it. Other embodiments according to the present invention are mentioned in the appended claims and the subsequent description of an embodiment of the invention.

### Brief description of the Drawings

Fig. 1 shows an embodiment of a system for obtaining an HD map of lane delimiters according to the invention.
Fig. 2 shows an embodiment of the localization tool according to the invention.
Fig. 3 shows an embodiment of the processing means according to the invention.
Fig. 4 shows an embodiment of the method for obtaining an HD map of lane delimiters according to the invention.

In the drawings, the same reference numbers have been allocated to the same or analogue element.

### Detailed description of an embodiment of the invention

Other characteristics and advantages of the present invention will be derived from the non-limitative following description, and by making reference to the drawings and the examples.

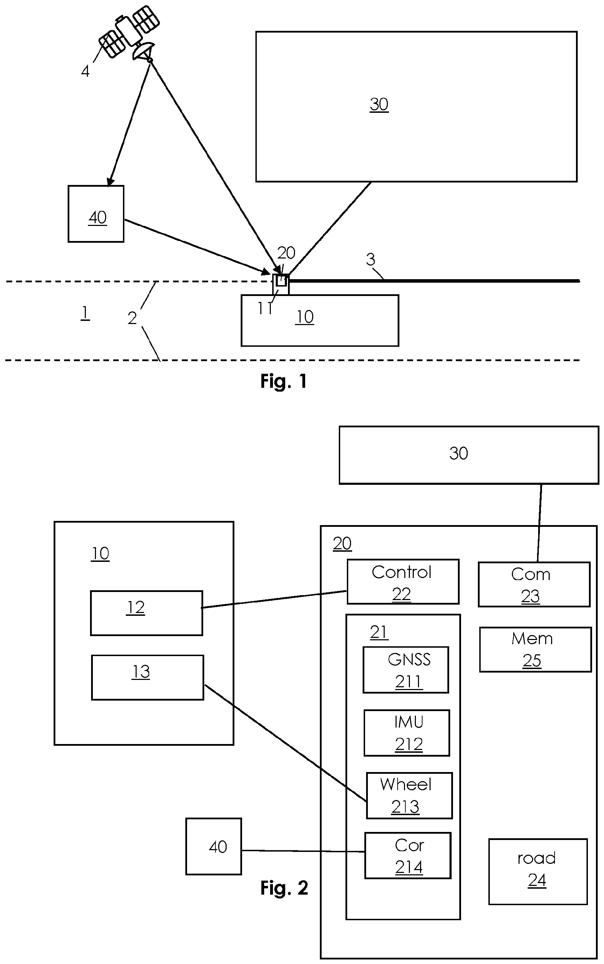

Fig. 1 shows the general concept of an embodiment of a system for obtaining HD maps for lane delimiters of a road 1 for automated driving according to the invention. The system comprises a localization tool 20 installed on a construction machine 10 and a processing means 30.

The road 1 has an upper layer or top surface often called the road surface or pavement. The road surface or pavement is normally made of asphalt or concrete or paving stone, but obviously many other road surfaces or pavements are possible. The road 1 has an axis of the road 1 or road axis extending in the travel direction(s) of the vehicles on the road 1 or of the road 1 itself. The road 1 can have one or more lanes. The lanes extend parallel to the lane axis which is the direction of travel of the vehicles on the respective lane. The lane axis is normally parallel to the road axis or to the lane axes of the other lane(s). However, there might also be roads 1 with lanes extending in some portions along the road axis not parallel to each other. The term road 1 should include not only public roads, but also private roads or any areas with defined roads on it. A road is thus defined as any combination of at least one lane extending along a certain travel direction, i.e. the road/lane axis. Examples for such areas can be industrial areas like ports, airports, logistic centers which have defined lanes for the vehicles driving in these areas.

The lane delimiter is preferably a line extending parallel to the road or lane axis defining the limits of the lane. Preferably, a lane is delimited by two lane delimiters defining the lateral borders of the lane. However, it is also possible to have a lane delimited only by one lane delimiter, e.g. a road with two lanes without a middle line. In the latter example, both lanes are only delimited on one side. The lane delimiter can delimit a lane to another lane (intermediate lane delimiter) or to the lateral border/boundary of the road or maybe to a different purpose area of the road (lateral lane delimiter). Such a different purpose area can be the breakdown lane which is not configured for driving or at an airport the remaining area of the airport field outside the pre-defined lanes which are not to be used by vehicles, but rather by airplanes. Another example is a parking space between the road and the curb of the sidewalk or cycle lane. The lane can however also be delimited by (only) one lane delimiter, e.g. one lane delimiter (e.g. a line) extending parallel to the lane axis and defining the lateral borders of the lane by fixed distances to the left and right from the single lane delimiter. The single lane delimiter could be a central line along which the vehicle must move. The lane delimiter extends along the land/road axis preferably over more than 10 meters, preferably over more than 50 meters, preferably over more than 100 meters, preferably over more than 500 meters.

In a first embodiment, the lane delimiter is a road surface marking, especially lane lines, like the lateral and/or intermediate line delimiting a lane. The lateral line (as lateral lane delimiter) shall indicate the line delimiting the most outer lane of the road. The intermediate lane (as intermediate lane delimiter) is a road line separating to neighboring lanes. A lane line is normally a dashed or continuous line drawn on the pavement. However, the road line can also be realized differently so that it can be visibly and/or haptically detected by the human. Other examples are for example cat eyes arranged alone a road line or a change of the surface pavement. The lane lines extend preferably over more than 10 meters, preferably over more than 50 meters, preferably over more than 100 meters, preferably over more than 500 meters parallel to the road axis. Even if a road line is not continuous, e.g. dashed, dotted or otherwise repeated according to a certain pattern, the road line is considered extending over more than the length of one road line item (dahs or dot or other). The road surface marking 3 or lane lines may include also temporary road surface markings as used for example for road works. Road surface marking 3 or road/lane lines 3 are preferably drawn/painted/sprayed on the road 1. However, road surface marking 3 may refer to any processing of the road surface to create a visible or haptic marking, e.g. by installing protruding elements (like cat eyes), by removing material from or adding material on the pavement, by gluing elements, etc.

Since there are also many roads 1 without road surface marking 2, especially in rural areas and on smaller roads 1, an alternative lane delimiter is the lateral boundary of the pavement of the lane or road 1.

There might be further examples for other lane delimiters, e.g. a step towards a sidewalk, etc.

The road construction vehicle 10 is configured for generating lane delimiters 3 on the road 1.

In a first embodiment, the road construction vehicle 10 is configured for providing/generating road surface marking 3 on the road 1. Road surface marking 3 are provided/generated on the road surface or pavement. The road construction vehicle 10 comprises preferably a marking unit 11 for generating the road surface marking 3 on the road 1 or on the road surface. The marking unit 11 comprises preferably a spray nozzle for spraying the road surface marking 3 on the road 1. However, depending on the road surface marking material, the marking unit 11 can also comprise other tools for providing the road surface marking 3 on the road 1. Normally, the road surface marking 3 is arranged along so-called pre-markings 2 which are arranged on the road 1 at the desired positions of the road surface marking 3. The road construction vehicle 10 for road surface marking can also be a road construction vehicle 10 for generating the pre-marking 2 for the road surface marking 3. Subsequently, the terms "paint" or "spray" are used to describe the process of generating the road surface marking 3 (including evtl. also the pre-marking 2) on the road 1 without limiting the generation of the road surface marking 3 (or 2 subsequentially not explicitly mentioned) on the road 1 to any technology of painting or spraying. These terms "spray", "paint", "generate" shall also include all other technologies for providing the road surface marking 3 on the road 1, e.g. by other road surface treatment technologies, e.g. chemical and/or mechanical treatments. Such treatments could be additive (like e.g. painting) or a material removal process.

In a second embodiment, the road construction vehicle 10 is configured to generate or process the road pavement. Preferably, the road construction vehicle 10 is configured to generate or process the lateral border/boundary of the road pavement. Preferably, the road construction vehicle 10 is a pavement machine generating the pavement of the road. The lateral border of the generated pavement is well defined or generated by the road construction vehicle 10. However, the road construction vehicle 10 could also be a machine for processing the border of the pavement like brushing or a road saw or other tools for changing the lateral border of an existing pavement, e.g. when creating a sidewalk on a road 1. Such a road construction vehicle 10 has instead of the marking unit 11 a tool unit for generating or processing the road pavement or its lateral border.

The invention is subsequently mainly described for a road construction vehicle 10 for road surface marking 3, preferably with a marking unit 11. However, it is obvious that the subsequently described features apply equally also for other road construction vehicles 10 and its tool unit like for road construction vehicles 10 for generating or processing road pavement. The term tool unit for a road construction vehicle 10 in general shall also include the marking unit 11 of a road construction vehicle 10 for road surface marking 3.

The road construction vehicle 10 can be part of the system according to the invention. It is however also possible that the system involves only the localization tool 20 which is then mounted for operation on a road construction vehicle 10. In other words, the localization tool 20 can be already integrated in the road construction machine 10 or can any time be retrofitted or mounted just for one operation on an existing road construction machine 10. Either integrated or retrofitted or mounted on the road construction machine 10 or used in order to mount it on such a road construction machine 10 is protected by the current invention. The localization tool 20 is preferably arranged such on the road construction machine 10 that it moves with the same itinerary as the marking unit 11 (or tool unit). Therefore, preferably the localization tool 20 is arranged on the marking unit 11 or tool unit. Thus, the position of the localization tool 20 corresponds to the position of the marking unit 11 (or tool unit) (eventually with a fixed off-set).

The marking unit 11 (or tool unit) is often connected to the rest of the road construction machine 10 via at least one relative movement device. A relative movement device allows a relative movement between a first part of the road construction machine 10 and a second part of the road construction machine 10 on which the marking unit 11 or tool unit is arranged (without any further relative movement devices). A relative movement device shall mean any component allowing a relative movement between the first and second part, like a hinge, pivot, damper, etc. By arranging the localization tool 20 on the second part which includes also the marking unit 11 or tool unit, the localization tool 20 moves with the exact same itinerary as the marking unit 11 or tool unit reducing thus errors caused by such relative movements within the road construction machine 10, when the marking unit 11 or tool unit is connected over at least one relative movement device to the localization tool 20.

The localization tool 20 comprises a location means 21, a control means 22 and a communication means 23. An exemplary localization tool 20 is schematically shown in Fig. 2.

The localization tool 20 is configured to record over time the positions/locations of the localization tool 20 during the generation of the lane delimiter by the road construction machine 10. The localization tool 20 is configured to record the itinerary of the localization tool 20 during the generation of the lane delimiter, e.g. during the road surface marking work. Since the localization tool 20 has a fixed relative position to the marking unit 11 or tool unit and thus to the generated road surface marking 3 or other lane delimiter on the road 1, the localization tool 20 is configured to detect the precise absolute position and itinerary of the road surface marking 3 or other lane delimiter. The itinerary of the localization tool 20 is recorded preferably as a plurality of absolute position points and their related time of recording. The position points are preferably recorded with a sampling frequency.

The location means 21 is configured for determining the location of the localization tool 20 (i.e. of the marking unit 11 or other tool unit). The location means 21 is configured to determine the current absolute position of the localization tool 20.

The localization means 21 comprises a global navigation satellite system (GNSS) means 211 for determining the absolute position of the localization tool 20 based on signals received from satellites 4. The GNSS means 211 is preferably based on the different propagation times of different signals received from different satellites 4. The GNSS satellites 4 can for example be selected from one or more of the following GNSS systems: GPS, GLONASS, Galileo, BeiDou, QZSS, IRNSS. The GNSS system can be global or regional. The GNSS satellites 4 can use existing satellite systems or future new systems. The GNSS means 211 comprises preferably a GNSS receiver for receiving the signals of the different GNSS satellites 4 and to measure the time of flight of the GNSS signals and to determine the absolute position/location based on the different time of flights. The GNSS means 211 comprises preferably a multi-GNSS receiver capable of using multiple GNSS systems for an improved accuracy of the position. Such multi-GNSS receivers are also called multi-constellation GNSS receivers.

The localization means 21 comprises preferably one or more of several correction means 212, 213, 214 to improve the accuracy of the determined (absolute) position.

These correction means 212, 213, 214 comprise preferably further sensors for determining a relative position change of the localization tool 20 like for example an inertial measurement unit 212 and/or an odometry sensor 213.

The inertial measurement unit 212 (IMU) comprises preferably one or more of an accelerometer and/or a gyroscope and/or a magnetometer to determine the inertial change of position, orientation, velocity and/or acceleration of the localization tool 20 allowing thus to determine a relative positional change of the localization tool 20. The IMU 212 allows thus to determine the relative itinerary of the localization tool 20 which can help to increase the accuracy of the absolute position of the location/position determined with the GNSS means 211. The odometry means 213 uses preferably the number of revolutions of a wheel to determine the relative movement of the localization tool 20. The wheel can be a dead wheel mounted on the road construction machine 10, preferably on the (second) part of the road construction machine 10 holding the marking unit 11 or other tool unit. The wheel could also be an operating wheel from the road construction machine 10. An odometry sensor 13 is arranged on the wheel to count the number of revolutions, preferably with an accuracy of less than one full revolution. Preferably, the odometry means 213 is an input means for receiving the number of revolutions of such a wheel. The odometry sensor 13 arranged on the wheel is in communication with the odometry means 213 to receive the further input of the number of revolutions of the wheel. With the information of the wheel, in particular its diameter, the relative distance moved with the road construction machine 10, preferably of the localization tool 20 mounted on the road construction machine 10 can be determined. This relative distance moved can be used to improve the accuracy of the absolute position of the localization tool 20 determined with the GNSS means 211. Preferably, the location means 21 uses the IMU 212 and the odometry means 213 for improving the accuracy of the absolute position of the localization tool 20 obtained by the GNSS means 211.

The correction means 212, 213, 214 comprise preferably further a GNSS augmentation means 214. The GNSS augmentation means 214 is configured to receive information about the GNSS system in the region of the localization tool 20 in order to reduce error of the GNSS system. Such errors are for example clock drift, ephemeris, ionospheric delay. The GNSS augmentation system is preferably a ground-based augmentation system (SBAS). However, it is also possible to use a satellite-based augmentation system. The SBAS or GNSS augmentation system is preferably a Differential GNSS (DGNSS) system. The DGNSS system or the GNSS augmentation system is preferably a real time kinematic (RTK) augmentation system or a carrier phase tracking augmentation system. However, it is also possible to use a classical DGNSS, a wide area RTK (WARTK), a precise point position (PPP), or other augmentation systems. The DGNSS system, preferably the RTK system comprises a base station 40 as a reference point for the GNSS system. The base station 40 receives the GNSS signals from one or more GNSS satellites 4 used at the GNSS means 211. The base station 40 has normally a fixed position or also called reference position. The GNSS augmentation means 214 receives from the base station 40 information allowing to correct the GNSS position determined at the GNSS means 211. The base station 40 can be part of a network offered by an augmentation provider (base station service). In this way, the information from the base station 40 can be obtained via internet or any other connection with the base station service 40. Such RTK base station services are offered in some regions. The base station 40 can be also a local or physical base station 40 mounted for the current inventive system, when the road surface marking 3 or other lane delimiter is generated. Thus, the base station 40 can be also part of the inventive system. The physical base station is mounted in the vicinity of the road construction machine 10 at a fixed position. In the vicinity means within less than within less than 25 km, preferably less than 20 km, preferably less than 15 km, preferably less than 10 km. The physical base station 40 is preferably connected to the localization tool 20, preferably to the location means 21, preferably to the GNSS means 211 or correction means 214 via a wireless communication connection. In case of a RTK base station as a service, the RTK base station is normally connected via an internet connection. This internet connection can be established for example through a common cellular phone network technology like 3G, 4G, 5G, ..., but also through other wireless communication technologies like loT networks like LoRa, .... In case of a dedicated for the measurement RTK base station, the base station could be connected also via internet, but could also be connected directly via a wireless communication, e.g. a wireless radio communication. The base station 40 (service or physical) is preferably an RTK base station 20. A physical base station 40 is mounted before the road surface marking work or other lane delimiter generation work is performed with the road construction machine 10.

The information of the further correction means 212, 213, 214 can be directly processed in the localization tool 20, maybe even in the location means 21 to obtain the improved location based on the correction information from the correction means 212, 213, 214 and to record the improved location (instead of the location obtained just by the GNSS means 21. It is also possible to record at each time the absolute location from the location means 21 (without correction) and the additional correction information from the different correction means 212, 213, 214 (raw data). This allows to do the correction later based on a post-processing, e.g. in the processing means 30. It is also possible to store/record the corrected location and the raw data. The raw data allow later to further improve the correction of the location by further correction information or special filtering. For example, with a Kalman filter the itinerary information can be improved using the information of the past itinerary and with post-processing even by using the information of the future itinerary.

The correction means 212, 213, 214 (and eventually the post-processing in the processing means 30) are preferably configured to improve the accuracy of the location points determined with the GNSS means 212 to below 50 cm, preferably below 30 cm, preferably below 20 cm, preferably below 10 cm, preferably below 8 cm, preferably below 5 cm, preferably below 4 cm, preferably below 3 cm, preferably below 2 cm.

The memory or storage means 25 is configured to store the itinerary or position points recorded with the location means 21. The storage means or memory 25 can also be used to store computer programs to be executed on the control means 22 for controlling the localization means 20. The storage means 25 can also store parameterizations for the different components 21, 23, 24 of the localization tool 20, e.g. one or more of the dimensions of the wheel used for the odometry means 213, the parametrization of the communication means 23 to establish the communication with the processing means 30, the calibration information for the location means 21. The calibration information contains the information of the relative position of the localization tool 20, in particular the GNSS means 211, in particular its GNSS receiver or antenna with respect to the lane delimiter 3 of the road 1 generated, when the position of the localization tool 20 is determined at the location unit 21. The storage means 25 can comprise a volatile memory (e.g. a RAM) and/or a non-volatile memory (e.g. a flash memory). The storage means 25 is optional and the localization tool 20 could also be realized without a storage means 25 by transferring the recorded itinerary directly via the communication means 23 to the processing means 30.

The communication means 23 is configured to communicate with the processing means 30. The communication means 23 is preferably configured to upload or send the recorded positions/itinerary of the localization tool 20 to the processing means 30. The uploaded positions/itinerary comprise preferably the corrected positions and/or the raw data. Preferably, the communication means 23 sends also the calibration data to the processing means 30. However, it is also possible that the calibration data are not inserted in the localization tool 20, but directly in the processing means 30. The communication means 23 is preferably configured to connect over a wireless communication, preferably a radio communication to the processing means 30. The communication means 23 is preferably configured to connect over the internet to the processing means 30. The communication means 23 can use a cellular phone network or a wide area network (WAN). WAN could be a low power WAN like LTE-M, NB-IoT or LoRA for the connection to the processing means 30. It is also possible that the communication means 23 uses a short range connection like Bluetooth, Wi-Fi or others to connect to an intermediate device which establishes then the connection to the processing means 30. The intermediate device could be for example a cell phone, smartphone or tablet.

The communication means 23 may be further configured to receive calibration information/data or other parameterization data for the localization tool 20. Such a data can be received from the processing means 30 or via a local device via a short range connection like Bluetooth, e.g. from a calibration device like a cell phone, smartphone or tablet. Such a calibration device could also access the communication means 23 via the processing means 30 instead of a local short range communication link.

The communication means 23 can also be used to communicate with sensors which are not integrated in the same housing as the localization tool 20. For example, an odometry sensor arranged on the wheel could be connected via a wireless connection, e.g. a Bluetooth connection to the communication means 23 to forward the odometry sensor data to the odometry means 213. Also a marking sensor 12 or other tool sensor (not shown) might be connected over the communication means 23 over a wireless or wired communication link.

The control means 22 or controller is configured for controlling the operation of the localization means 20. In a preferred embodiment, the control means 22 receives from the road construction machine 10, preferably from the marking unit 11 marking information. Marking information identifies, if the marking unit 11 is currently spraying the road surface marking 3 on the road 1 or not. These marking information are preferably sent from the vehicle information of the road construction machine 10 to the localization means 20, preferably over the communication means 23 to the control means 22. However, it would also be possible to arrange a marking sensor 12 on the marking unit 11 or vehicle 10 to detect the marking information with the marking sensor 12. The marking sensor 12 could be a camera connected with an image recognition method for recognizing the marking information. This can be realized for example by a machine learning technology. The marking sensor 12 could also be arranged on the switch for switching on and off the marking of the road surface marking 3 of the marking unit 11 in the road construction machine 10. The control means 22 controls the recording of the itinerary or positions of the localization tool 20 based on the marking information. Preferably, when the marking unit 11 is currently generating road surface marking 3, the localization tool 20 records the itinerary of the localization tool 20 related to the generated road surface marking 3 (in the memory 25). When the marking unit 11 is currently not generating road surface marking 3, the localization tool 20 does not record the itinerary or records the itinerary labeled as not relating to surface road marking 3. The latter option is preferred as the itinerary before and after the road surface marking 3 generation can be used for improving the accuracy of the position.

When the generation of a lane delimiter is different than road surface marking, the delimiter work information can be received. The delimiter work information identifies, if the tool unit is currently generating a lane delimiter on the road 1 or not. This delimiter work information are preferably sent from the vehicle information of the road construction machine 10 to the localization means 20, preferably over the communication means 23 to the control means 22. However, it would also be possible to arrange a tool sensor 1 on the tool unit or vehicle 10 to detect the delimiter work information with the tool sensor 1. The tool sensor could be a camera connected with an image recognition method for recognizing the delimiter work information. This can be realized for example by a machine learning technology. The tool sensor could also be arranged on the switch for switching on and off the tool unit in the road construction machine 10. The control means 22 controls the recording of the itinerary or positions of the localization tool 20 based on the delimiter work information. Preferably, when the marking unit 11 is currently generating the lane delimiter 3, the localization tool 20 records the itinerary of the localization tool 20 related to the generated lane delimiter 3 (in the memory 25). When the tool unit is currently not generating the lane delimiter 3, the localization tool 20 does not record the itinerary or records the itinerary labeled as not relating to the generated lane delimiter 3. The latter option is preferred as the itinerary before and after the lane delimiter 3 generation can be used for improving the accuracy of the position.

The control means 22 can further control the interaction of the location means 21, the memory 25 and the communication means 23. The control means 22 can be a CPU or a microprocessor. However, the control means 22 can also be realized by a logic circuit like an FPGA, etc. The control means 22 can also be non-programmable and be realized by a special circuitry.

In one embodiment, the localization tool 20 could comprise further a road sensor 24. The road sensor 24 is preferably configured to detect the lateral border of the road 1, i.e. the point of the lateral border of the road paving. The road sensor 24 could be a 3D camera or a LIDAR sensor or a laser profile sensor. Since the marking unit 11 or tool unit moves along the lateral border of the road 1, when it generates the (lateral) lane delimiter 3 of the road 1, a road sensor 24 could detect at the same time the lateral limit of the road paving. A laser profile sensor which detects a profile of the road 1 perpendicular to the movement direction of the tool unit 11 or of the road construction machine 10, could detect the lateral point of the road paving in the road surface profile. This allows to detect in addition to the point of the road surface marking 3 the point of the lateral end of the road paving. If the road construction vehicle 10 is not for road surface marking, the road sensor 24 could further improve position of the lane delimiter, e.g. the lateral border of the pavement. This might not always be used, especially not when the road surface marking 3 is the middle line or a line separating different lanes. Such a road sensor 24 might alternatively or in addition be used to detect the distance of the localization tool 20 from the road 1. This could improve the vertical precision of the itinerary of the lane delimiter 3 as the exact distance of the localization tool 20 and the road 1 or the lane delimiter 3 is measured for each sampling point or at least for some of them.

The processing means 30 is configured to receive the itinerary of the localization tool 20 from the localization tool 20. The processing means 30 is further configured to obtain/generate an HD map with the precise position/itinerary of the lane delimiter 3 on the road 1 based on the itinerary of the localization tool 20. The precise position/itinerary of the lane delimiter 3 can be obtained based on the position/itinerary of the localization tool 20 and based on the calibration information (which defines the relative position of the lane delimiter 3 with respect to the recorded positions/itinerary of the localization tool 20). Instead of the calibration information or in addition, the data from the road sensor 24 could be used to determine the correct position or itinerary of the lane delimiter 3.

The itinerary information received is in the form of a point cloud. Preferably, the itinerary information is vectorized in order to reduce the amount of data and/or to smooth the itinerary information in the HD map. However, the itinerary of the road surface marking 3 of the road 1 can also be stored as a point cloud or in a further different way in the HD map.

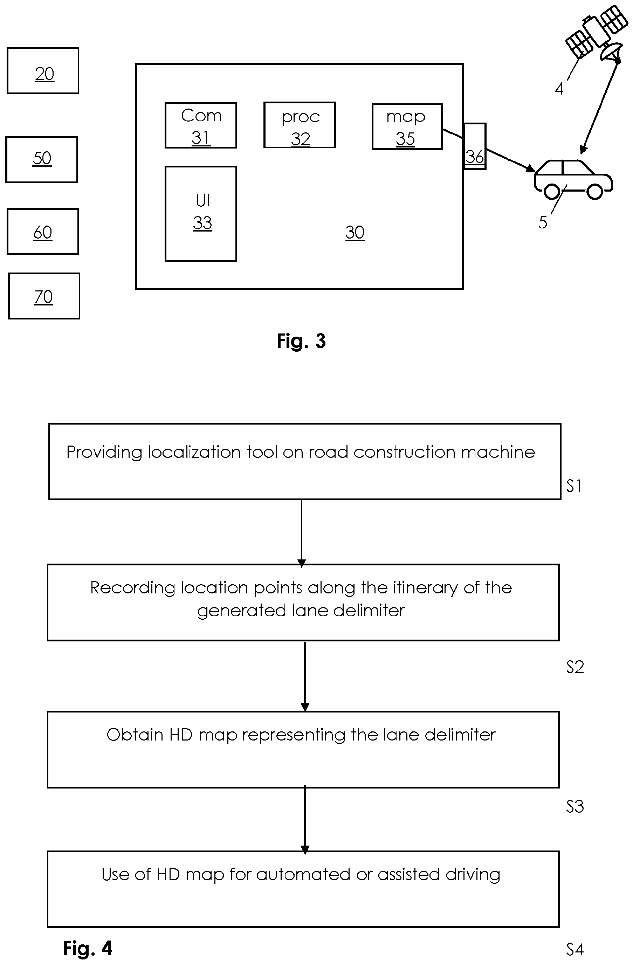

The processing means 30 is configured to obtain the HD map representing the lane delimiter 3 generated with the road construction machine 10 based on the itinerary recorded with the localization tool 20. Fig. 3 shows an exemplary embodiment of the processing means 30.

The processing means 30 comprises preferably a server. Preferably, at least a part of the described processing is performed on the server. It is also possible that a part of the processing is performed already in the localization tool 20 or in an intermediate device, e.g. some pre-processing. For example, the itinerary of the localization tool 20 could already be preprocessed with the calibration information so that the localization data sent from the localization tool 20 or intermediate device to the server corresponds already to the itinerary of the lane delimiter 3. The pre-processing could also already include some of the correction processing based on correction information or based on the relative position sensors 211 and 212.

The processing means 30 is preferably realized as a server. The processing means 30 or the server can be realized by one or more computing means which might be located close together, e.g. in a server center or distributed over many locations. The processing means 30 is preferably arranged at least partly remote from the localization tool 20. The processing means 30 is preferably configured to receive the itinerary from many localization tools 20 arranged on many different road construction machines 1 generating different road surface markings 3 on one or more roads 1.

The processing means 30 comprises preferably a communication means 31. The communication means 31 is preferably configured to communicate with the localization tool 20. The communication means 31 receives from the localization tool 20 the itinerary of the localization tool 20 recorded during the road surface marking of the road construction machine 10. The communication means 31 is preferably configured to communicate via the internet with the localization tool 20. The communication means 31 can preferably also be used to communicate with one or more client devices 50, 60, 70 as will be explained in more detail later. The communication means 31 can obviously communicate with the localization tool 20 and/or with client devices 50, 60, 70 via different communication networks.

The processing means 30 comprises preferably a post-processing means 32 for post-processing the itinerary of the localization tool 20 received at the communication means 31. The post-processing has principally the purpose of generating the HD map based on the received itinerary of the localization tool 20. The HD map can be obtained based on the received itinerary and the calibration information. If the lane delimiters 3 of the road(s) 1 in the HD map are generated by a plurality of road construction machines 10, the HD map is generated based on the itinerary of the different localization tools 20 on the different road construction machines 10 (and based on the calibration information of the different localization tools 20 on the different road construction machines 10). The accuracy of the position information of the lane delimiter 3 in the HD map is preferably below 50 cm, preferably below 30 cm, preferably below 20 cm, preferably below 10 cm, preferably below 8 cm, preferably below 5 cm, preferably below 4 cm, preferably below 3 cm, preferably below 2 cm. Preferably, the HD map comprises a continuous position data of the lane delimiter(s) along the axis of the road/lane. Continuous position data means that the continuous position data reflect the form or curve of the road line and/or that at any position along the road axis, the position of the road line(s) can be retrieved from the HD map. The HD map is finally configured to provide the position of the road lines/lanes so that an automated vehicle 5 can drive between the positions of two road lines based on the current position of the vehicle 5. The current position of the vehicle 5 is preferably obtained by a GNSS receiver connected to GNSS satellites 4. Thus, the automated vehicle 5 could theoretically drive in a lane delimited by two lane delimiters 3 without seeing these road lines, just based on positions of the road lines obtained from the HD map by holding the current position of the vehicle 5 between the road lines 3, while the vehicle moves along the road 1 (axis).

The post-processing can further have the purpose of improving the accuracy of the location of the lane delimiter generation. This can be achieved by further correction information or by a filtering. The post-processing can have the purpose incorporating marking dimension information in the HD map. The marking dimension information can be for example the width of the road surface marking, in particular of the road line. The post-processing can be the integration of the road surface marking type in the HD map, e.g. if the road surface marking is a road line, a road delimiting line or a middle line or a lane delimiting line, etc.. The post-processing can be the integration of road information, i.e. of information regarding the road 1. Such road information can also be a link to the respective road 1 in another map layer, e.g. the SD map containing all the information related to this road 1.

The post-processing is preferably automated. However, it is also possible that the post-processing involves the intervention of a human for some processing steps.

The HD map obtained is stored in a map means 34. This can be a database storing the HD map. The map means 34 can provide lane delimiter data based on a request for a certain itinerary. The road lane delimiter data could also be provided fully, e.g. to a map service provider which offers this map to its end clients.

The processing means 30 comprises preferably a special map interface 36 through which automated vehicles 5 can access the HD map from the map means 35. The map interface 36 can be realized according to the standards used for the interfaces between map providers and automated vehicles. Different interfaces 36 might be used to grant map providers access to the map.

The HD map in the map means 35 might be continuously updated by new lane delimiters 3 generated by road construction machine(s) 10. For example, for road construction, the road construction machine 10 generates new temporary road surface markings which are automatically uploaded to the processing means replacing the currently stored road surface markings of the HD map. Thus, the HD map remains always up-to-date directly when the lane delimiters are generated.

The user interface 33 provides one or more front-ends for allowing to communicate with client devices 50, 60, 70. The user interface 33 might provide a front-end for a client device 50 of a driver of the road construction machine 1 providing with helpful support information regarding the correct positioning of the generated lane delimiter and the correct connection of the localization tool 20 with eventual sensors or the proper working of the localization tool 20. The user interface 33 might provide a front-end for a client device 60 for the infrastructure provider, e.g. the construction company of the road construction machine 10 or the owner of the road 1. Such a front-end might provide interesting data about the state of the road marking process or other road work process, the quality in terms of correct dimensions of the marking 3 or other road work, etc.. The user interface 33 might provide a front-end for a client device 70 for a calibration worker which inserts calibration information, when providing the localization tool 20 on the road construction machine 10. There might be further front-ends, e.g. for map clients which want to access the HD map generated. Such a front-end for map clients might help to manage the subscription model or other configuration of the service.

The processing means 30 is preferably realized as a Software as a Service (SaaS). The different client devices 50, 60, 70 might access via user credentials to the processing means 30. Each user is preferably related to one or more user types, like a road construction machine driver user, a calibration user, an infrastructure user (like an infrastructure or construction company), a map consumer user, a map provider user, etc..

The road construction vehicle 10 might be configured to generate two lane delimiters at the same time, e.g. by generating road surface marking 3 on two sides of the vehicle 10 or by generating two pavement boundaries on the two sides of the pavement machine 10. In this case, the system could comprise two localization tools 20 on the road construction machine 10, each having a fixed positional relationship with the two lane delimiters, respectively. Thus, the first localization tool 20 would have a first positional relationship with a first tool unit or a first lane delimiter generated and the second localization tool 20 would have a second positional relationship with a second tool unit or a second lane delimiter generated by the same road construction vehicle 10. The first positional relationship could be defined by a first calibration information and/or a first road sensor 24 and/or the second positional relationship could be defined by a second calibration information and/or a second road sensor 24. It is also possible that the road construction vehicle 10 might be configured to generate two lane delimiters at the same time, but has only one localization tool 20 mounted with two positional relationships to the respective two lane delimiters generated by the road construction vehicle 10.

Fig. 4 shows an exemplary method for obtaining an HD map of road surface marking according to the invention.

In step S1, the localization tool 20 is provided on the road construction machine 1, preferably close to the marking unit 11. Preferably, the localization tool 20 is a single device which is mounted or fixed on the road construction machine 1. However, it is also possible that the localization tool 20 comprises different components which are individually fixed on the road construction machine 1, e.g. a main device and some distributed components like one or more of the odometry sensor, an odometry wheel, a road sensor 24, an marking sensor or others. It is also possible that the localization tool 20 is integrated in the future already in production of the road construction machine 10.

The providing of the localization tool 20 on the road construction machine 10 involves preferably also the calibration of the localization tool 20. The calibration comprises preferably the determination of the relative position of the localization tool 20, more precisely of the GNSS receiver 211 with respect to the lane delimiter 3 produced by the tool unit 11 on the road 1. The calibration could comprise further to determine the road work type and/or characteristics. The road work type includes for example the type of road work to be performed like pavement work or road surface marking work, if the road work relates to a renewal or a first-time generation like for a new road. The calibration could include validity data indicating when acquired lane delimiter data shall be valid, i.e. when the road will be opened again for traffic. Validity data could have an end date, e.g. for temporary road work with temporary lane delimiter markings. However, normal lane delimiter data have no validity end date. The calibration data can also be used to make analysis for maintenance purposes and for validating the quality of the road works.

This step can be performed only once for the road construction machine 10, when the localization tool 20 is provided on the machine 10. This step can also be performed each time for each new intervention of the road construction machine 10, e.g. to update the calibration information.

If the road construction machine 3 is configured to generate two or more lane delimiters at the same time, this step S1 can also include to provide more than one localization tool 20 on the road construction vehicle 10, and/or to determine two or more calibration information.

Optionally, a base station 40, preferably an RTK base station 40 is arranged in the vicinity of the road construction site to obtain correction information from the RTK base station 40 at the augmentation means 214. However, this might be omitted, if a RTK base station service is used or other augmentation services or methods are used.

In step S2, the localization tool 20 records the itinerary of the localization tool, and thus of the generated lane delimiter 3, while the road construction machine 10 performs the generation of the lane delimiter 3 on the road 1.

In step S3, the processing means 30 generates an HD map based on the itinerary recorded in step S2. Generating an HD map might also include to update an existing HD map with new lane delimiter 3 obtained in step S2.

In step S4, the HD map generated in step S3 is used by a vehicle 5 for automated driving. The vehicle 5 is preferably a connected automated vehicle (CAV). The vehicle 5 or CAV is preferably a cooperative CAV (CCAV) operating in a cooperative connected automated mobility (CCAM) system. The vehicle 5 has preferably an automation level 3 to 5 according to SAE standard J3016. The vehicle 5 performs an automated driving by keeping the position of the vehicle 5 in between road surface markings, preferably road lines 3 obtained by the HD map generated in step S3. The vehicle 5 is driven such that it moves along the axis of the road keeping the vehicle 5 between the road lines 3 (except when there is an active decision of to leave the road lane delimited by the road lines 3). It is clear that the automated driving can be further supported by other map layers like the HD obstacles map layer or by environmental sensors of the car and the infrastructure.

The HD map data of the road surface marking 3 can be further used by other (non automated) vehicles 5, e.g. for automated lane keeping systems. Thus, in an alternative step S4, the HD map may be used by vehicle assistance systems like automated lane keeping systems. Automated lane keeping systems detect, when the vehicle 5 leaves the current lane. Automated lane keeping system either output a warning, e.g. a vibration of the steering wheel, an audio sound, etc. or even intervene in the manual steering operation to keep the vehicle 5 on the lane. These systems work currently mainly optically and might suffer problems when the sight is bad, e.g. at night or with fog. The HD map for road surface marking may support these automated lane keeping system in such critical conditions just using the current position of the vehicle 5. Such automated lane keeping systems are also used in vehicles with automation levels 0 to 2 according to the SAE standard J3016.

Preferably, the vehicles 5 using the HD map in step S4 are not road construction vehicles.

It should be understood that the present invention is not limited to the described embodiments and that variations can be applied without going outside of the scope of the claims.

## Claims

1. Method for obtaining a high definition map of lane delimiters (3) for highly automated driving:
providing (S1) a localization tool (20) on a road construction machine (10), wherein the road construction machine (10) is configured for generating a lane delimiter (3) of a road (1), wherein the localization tool (20) is configured to determine location points of the localization tool (20) over time,
recording (S2), in the localization tool (20), the location points along the itinerary of the localization tool (20) during the generation of the lane delimiter (3) on the road by the road construction machine (10),
processing (S3), in a processing means (30), the recorded location points to obtain map data of the high definition map representing the generated lane delimiter (3) generated on the road (1).

2. Method according to claim 1, wherein the road construction machine (10) is configured for generating road surface marking (3) as the lane delimiter.

3. Method according to claim 2, wherein the road construction machine comprises a marking unit (11) for generating the road surface marking (3) on the road (1), wherein the localization tool (20) is mounted on the marking unit (11) so that the localization tool (20) performs the same itinerary as the marking unit (20).

4. Method according to claim 3, wherein the localization tool (20) is communicatively connected to the road construction machine (10) to receive marking information indicating, if the marking unit (11) is currently generating road surface marking (3) on the road (1) or not, wherein the localization tool (20) records the itinerary based on the marking information.

5. Method according to claim 4, wherein, when the marking unit (11) is currently generating road surface marking (3), the localization tool (20) records the itinerary of the localization tool (20) related to the generated road surface marking (3), wherein, when the marking unit (11) is currently not generating road surface marking (3), the localization tool (20) does not record the itinerary or records the itinerary labeled as not relating to road surface marking.

6. Method according to one of the previous claims, wherein lane delimiter is a lateral border of the pavement, wherein the road construction machine is road construction is a road paving machine, wherein the localization tool (20) is placed such on the road paving machine that the itinerary of the localization tool (20) represents the itinerary of the lateral border of the road pavement.

7. Method according to one of the previous claims, wherein the localization tool (20) comprises a GNSS receiver (211) for determining the location points via the GNSS receiver (211).

8. Method according to claim 7, wherein the location points are determined by applying a GNSS correction using RTK data and/or carrier phase tracking data received from a base station (40).

9. Method according to claim 8 comprising further the step of:
mounting the base station (40) in the vicinity of the road construction machine (10) before the recording of the location points during the generation of the lane delimiter (3) in a recording area, and
demounting the base station (40) in the vicinity of the road construction machine (10) after the recording of the location points during the generation of the lane delimiter (3) has been finished in the recording area.

10. Method according to one of claims 7 to 9, wherein localization tool (20) comprises further relative position sensors (212, 213) for sensing a relative positional change, wherein the location points over time recorded are further improved by relative position data of the localization tool recorded during the generation of the lane delimiter (3) on the road (1).

11. Method according to claim 10, wherein the relative position sensor comprises an inertial measurement unit (212) and/or an odometry sensor (213, 13).

12. Method according to one of the previous claims comprising the step of providing (S4) the map data to a vehicle (5) to support the vehicle (5) for highly automated driving.

13. System for obtaining a high definition map of lane delimiters for highly automated driving:
a localization tool (20) configured to be mounted on a road construction machine (10) for generating a lane delimiter (3) on a road (1), wherein the localization tool (10) is configured to record the location points of the localization tool (20) over time, while the road construction machine (10) generates the lane delimiter (3) in order to obtain the location points of the lane delimiter (3),
a processing means (30) for processing the recorded location points to obtain map data of the high definition map representing the lane delimiter (3) generated on the road (1).

14. System according to the previous claim comprising further the road construction machine (10) with the localization tool mounted on it.

15. Computer program for obtaining a high definition map of lane delimiters (3) for highly automated driving, wherein the computer program comprises a first computer program and a second computer program, wherein the first computer program comprises instructions to, when executed on a localization tool (20) mounted on a road construction machine (10) for generating a lane delimiter, recording the location points along an itinerary of the localization tool (20) during the generation of the lane delimiter (3) on the road (1) by the road construction machine (10), and to sending the location data based on the location points to the second computer program, wherein the second computer program comprises instructions to, when executed on a processing means (40), receiving the location data and to processing the received location data to obtain map data of the high definition map representing the lane delimiter (3) of the road (1).
